# EUROPEAN PATENT APPLICATION

(11) **EP 0 563 753 A1**
(43) Date of publication of application: **06.10.1993**
(21) Application number: 93104749.2
(22) Date of filing: 23.03.1993
(51) Int. Cl.: C08B 37/00, A61K 31/725

(54) **Iron complexes with sulfomucopolysaccharides salts**

(30) Priority: 01.04.1992 IT MI920787
(71) Applicant: FRANCIA FARMACEUTICI INDUSTRIA FARMACO BIOLOGICA S.R.L., I-20138 Milan (IT)
(72) Inventor: Di Schiena, Michele Giuseppe, I-20080 Cisliano, Milano (IT)
(74) Representative: Minoja, Fabrizio

(57) **Abstract**

Complexes of iron with sulfomucopolysaccharides salts containing Fe^{II} or Fe^{III} in amount from 6 to 11% w/w useful in the martial therapy.

## Description

The present invention refers to iron complexes of sulfomucopolysaccharides salts, to a process for their preparation and to pharmaceutical compositions containing them. The hypochromic sideropenic anemias ask for a iron supplement therapy known as martial therapy. Iron is generally administered by the oral route. This administration was carried out in the past by means of iron (II) or iron (III) inorganic or organic salts, such as sulphate, phosphate, citrate, gluconate etc.

Iron complexes with polysaccharides or modified proteins were thereafter introduced to overcome the side effects (abdominal pains, diarrhea etc.) caused by said salts. The administration of proteic complexes decreases the entity of side effects, but gives stability problems. Similarly, the saccharide complexes have stability problems and do not anyhow prevent the iron induced side effects.

An iron (III) - chondroitin sulphuric acid complex has been disclosed in the Italian patent n. 1164111.

The preparation of this compound is somewhat complex, since it comprises the conversion of the chondroitin sulphate into its acid form by eluting through an acid ion-exchange resin and subsequent reaction with a ferric salt. This method cannot be used with most sulfomucopolysaccharides since their acid form gives very thick gels, making practically impossible the process. In the cited patent an alternative method is also proposed based on the double exchange reaction between a chondroitin sulfuric acid salt and an iron salt, with the proviso that the salt resulting from the cation of chondroitin sulfate and the anion of the iron salt is insoluble in the reaction conditions.

During a study aiming at improving the preparation process of iron-sulfomucopolysaccharides complexes, it has been surprisingly found that, according to the hereinafter described process, iron-sulfomucopolysaccharides complexes are obtained having characteristics completely different from that of the up to now known complexes.

The surprising feature of the invention consists in that the iron atoms do not exchange with the cations of sulfomucopolysaccharide, as it clearly occurs with the compound disclosed in IT 1164111.

Object of the present invention is therefore provided by complexes of iron with sulfomucopolysaccharides salts. Iron may be present both in the form II and in the form III. Preferred sulfomucopolysaccharides are dermatane sulphate, chondroitin sulfates, sulodexide, mesoglycans, heparan sulfates, idosanes, heparins and heparinoids.

The complexes of the invention, besides being stable, are characterized by high solubility in water and the obtained solutions have pH close to neutrality.

A further object of the invention is provided by a process for the preparation of the above disclosed complexes.

The process comprises the reaction in stoichiometric ratios of a sulfomucopolysaccharide salt, preferably an alkaline or alkali-earth salt, with an iron salt. The reaction is carried out in aqueous medium, keeping the pH of the reaction mixture close to neutrality, preferably from 5.5 to 7.5, even more preferably from 6 to 7. For the control of the reaction pH a base may be used, for example a metal hydroxide, carbonate or bicarbonate. The same metal present in the starting sulfomucopolysaccharide salt is preferably used.

The complex is isolated from the reaction solutions by means of conventional methods, for example by precipitation by addition of an organic cosolvent, such as methanol, ethanol, isopropanol, acetone.

The complexes of the invention contain iron in percentages ranging from 6 to 11%.

The pharmacological tests have shown the advantageous properties of the complexes of the invention, such as lower toxicity and better gastric tolerability and reduced or absent onset of side effects (abdominal pains, diarrhea, etc.).

In view of their high hydrosolubility, the iron complexes with sulfomucopolysaccharides are administered by injection route. A further advantageous feature of the complexes of the invention is due to the fact that the aqueous solutions are devoid of the "astringent" taste characteristic of the iron compounds.

In this way the oral administration is more acceptable for the patient. The astringent taste is related to the proteins precipitation, as a consequence of the irritating effect on the gastroenteric mucosa, thus the complexes of the invention, lacking this characteristic, are better tolerated at gastric level.

The administration of the compounds of the invention is carried out by means of suitable pharmaceutical forms, comprising a therapeutically effective amount, generally from 2 to 120 mg of iron ion for one or more daily administrations, of an iron-sulfomucopolysaccharide complex in admixture with one or more pharmaceutically acceptable carriers.

Examples of pharmaceutical forms are capsules, tablets, sachets, syrups, monodose vials, suppositories, solutions and injectable suspensions.

The following examples further illustrate the invention.

### EXAMPLE 1

20 g of sulfomucopolysaccharide, corresponding to 2 g of Na⁺ and having the following analytical characteristics: Na = 10% - S = 9% - Hexosamine = 34% - uronic acids = 32% were dissolved in 300 ml of water.

A solution containing 7.8 g of FeCl₃·6H₂O was added dropwise to the clear, well-stirred solution.

Contemporaneously, a 4N NaOH solution was dripped so as to keep the mixture from pH 6 to 7.

Once the ferric chloride addition is over, the reaction mixture was clear and blood red in colour; it was kept under stirring up to complete stabilization of the pH in the above cited range.

Then, the mixture (400 ml) was slowly poured in 600 ml of 95% ethanol under vigorous stirring: the ferric complex precipitated as dark red, flocculent solid.

The suspension was stirred for several hours, preferably overnight.

The solid was isolated by pump filtration and washed on the filter with a 1:1.5 water: 95% ethanol mixture, up to Cl⁻ negative reaction in the filtrate; it was finally washed with 4 x 25 ml of acetone.

The solid was dried in air stream at 60°C or under vacuum.
Yield by weight: 20.2 g corresponding to 93.5% of the theoretical value.
- Analytical data:: iron 7% (atomic abs.)
sodium 9.3% (atomic abs.)
Humidity: 9% (KF)

### Stability assays of the complex

Three aliquots of a 10% water solution of the obtained complex were respectively assayed with diluted ammonia, 1N NaOH, with ammonium sulfocyanide. In the first two cases, no precipitation occurred, while the third test did not give the Fe⁺⁺⁺ qualitative reaction.

Elution on IR 120 H⁺ column: absence of iron exchange.

Dialysis on Spectropor^{R} membrane: no dialysis.

### EXAMPLE 2

By a procedure similar to that described in Example 1, except for the use of an heparinoid in amounts of 2 g of Na⁺, having the following analytical characteristics: Na = 9% - S = 7.9% - Hexosamine = 27.3% - uronic acids = 27.2%, 18 g of ferric complex were obtained.

### EXAMPLE 3

By a procedure similar to that described in Example 1, except for the use of heparin sulphate in amount of 2 g of Na⁺, having the following analytical characteristics: Hexosamine = 34.8% - uronic acids = 36.3% - S = 8.8% - Na = 10%, 23 g of ferric complex were obtained.

### EXAMPLE 4

By a procedure similar to that described in Example 1, except for the use of natural glycan sulphate in amount of 2 g of Na⁺, having the following analytical characteristics: slow moving heparine = 5% - fast moving heparine = 36% - dermatane sulphate = 59% - S = 7.27% - Na = 10.13%, 23 g of ferric complex were obtained.

### EXAMPLE 5

By a procedure similar to that described in Example 1, except for the use of chondroitin sulphate in amount of 2 g of Na⁺, having the following analytical characteristics: Hexosamine = 27% - uronic acids = 25.9% - S = 8.8% - Na = 10%, 20.4 g of ferric complex were obtained.

### EXAMPLE 6

Using galactosaminoglucuronglycane sulphate sodium salt (sulfomucopolysaccharide) in amount of 2 g Na⁺ as in Example 1, 20 g of ferric complex were obtained.

### EXAMPLE 7

By operating as in Example 1, ferric chloride tetrahydrate (stoichiometric ratio Na⁺/Fe⁺⁺ 1:1) was used with the same sulfomucopolysaccharide. The preparation was used using a nitrogen stream to prevent the ferrous ion oxidation. The drying was performed under vacuum. Yield by weight: 18 g.

## Claims

1. Complexes of iron with sulfomucopolysaccharides salts containing Fe^{II} or Fe^{III} in amount from 6 to 11% w/w.

2. Complexes according to claim 1, wherein sulfomucopolysaccharide is selected from the salts of dermatane sulphate, chondroitin sulfates, sulodexide, mesoglycans, heparan sulfates, idosanes, heparins and heparinoids.

3. Complexes according to claims 1-2, wherein the sulfomucopolysaccharide salts are alkali or alkaline-earth metal salts.

4. A process for the preparation of the complexes of claims 1-3 comprising the reaction of a sulfomucopolysaccharide salt with an iron salt in an aqueous medium, at a pH close to neutrality, subsequent precipitation of the formed complex with an organic solvent and its recovery.

5. A process according to claim 4, wherein the reaction pH is from 5.5 to 7.5.

6. Pharmaceutical compositions containing a complex of claims 1-3 as an active principle in admixture with a suitable vehicle.

7. Use of the compounds of claims 1-3 as therapeutic agents.

8. Use of the compounds of claims 1-3 for the preparation of a medicament useful for the martial therapy.
